# EUROPEAN PATENT APPLICATION

(11) **EP 4 832 150 A1**
(43) Date of publication of application: **28.10.2026**
(21) Application number: 24907959.1
(22) Date of filing: 10.12.2024
(51) Int. Cl.: H01M 10/54, H01M 10/44, H01M 50/627, H01M 50/102, C22B 3/06, C22B 3/00

(54) **METHOD OF DISPOSING BATTERY COMPRISING METHOD FOR DISCHARGING WASTE BATTERY**

(30) Priority: 18.12.2023 KR 20230184555
(71) Applicant: POSCO Holdings Inc., Pohang-si, Gyeongsangbuk-do 37859 (KR)
(72) Inventor: KIM, Wanyi, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020209
(87) International publication number: WO 2025/135675

(57) **Abstract**

The present invention relates to a battery processing method, and more particularly, to a battery processing method including a method for discharging a waste battery containing lithium, the method comprising preparing a battery and water-discharging the battery in an aqueous solution containing a sulfate-based ionic material, wherein the sulfate-based ionic material is a by-product generated in a waste battery recycling process.

## Description

### [TECHNICAL FIELD]

The present invention relates to a battery processing method, and more particularly, to a battery processing method including a method for discharging a lithium-containing battery.

### [BACKGROUND ART]

As demand for electric vehicles has become active worldwide, the problem of processing waste batteries generated from the electric vehicles has emerged as a social issue. In the case of lithium secondary batteries, which are main raw materials of the waste batteries, organic solvents, explosive materials, and heavy metal materials such as Ni, Co, Mn, and Fe are contained. However, Ni, Co, Mn, and Li have high scarcity value as valuable metals, and recovery and recycling processes after disposal of lithium secondary batteries have emerged as an important research field.

Specifically, a lithium secondary battery mainly includes copper and aluminum used as current collectors, oxides containing Li, Ni, Co, Mn, Fe, Al, and P constituting a positive electrode material, and graphite used as a negative electrode material, and includes a separator separating the positive electrode material and the negative electrode material and an electrolyte injected into the separator. As a solvent constituting the electrolyte solution and a solvent used as a salt, carbonate organic materials such as ethylene carbonate and propylene carbonate are mainly mixed and used, and, for example, LiPF₆ is used.

In order to utilize the waste battery, development of a recycling process for safely discharging the waste battery before crushing the waste battery is being actively conducted. The discharged waste battery is subjected to drying and calcination processes to remove moisture and electrolyte present inside the battery. After the drying and calcination processes, black powder containing Li, Ni, Co, Mn, Fe, P, Al, Cu, and graphite is produced through crushing, peeling, and particle size selection.

At this time, various methods for discharging a lithium-containing waste battery include water discharge using water as a medium and an electrical discharge method for electrically discharging the battery. In the case of water discharge, the battery itself is immersed in water, which is a medium, to forcibly discharge a lithium ion battery. In the case of water discharge, there is a risk that an electrolyte leaks out of the battery due to forced disconnection and floats on water, and when the temperature of water rises due to excessive water discharge, the electrolyte ignites and a fire occurs on the water surface even during water discharge. In addition, water discharge has a problem in that a discharge time is longer than that of electrical discharge. In the case of water discharge, forced discharge is performed using ionic conductivity of water, and thus there may be a problem in that the discharge rate is reduced compared with a method of discharging by applying a voltage from the outside, such as electrical discharge. However, in the case of water discharge, a rebound phenomenon in which voltage is restored after completion of discharge is not observed, and thus post-processes such as crushing and particle size selection for recovering valuable metals in the battery can be safely performed.

In such water discharge, in order to improve a discharge rate, materials having high ionic conductivity may be dissolved to increase the discharge rate. NaCl has been used as the material having high ionic conductivity, but the NaCl may remain in the battery and generate Na or Cl gas in calcination and drying processes, causing a problem of corrosion of equipment. In addition, the NaCl remains in black powder obtained after crushing and particle size selection processes, and during acid leaching using sulfuric acid or nitric acid, two or more types of anions such as Cl⁻, SO₄²⁻, or NO₃⁻ remain in an aqueous solution, making it difficult to adjust pH performed to remove impurities, thereby causing a problem of reduced recovery rate of valuable metals.

To solve these problems, research is required on an alternative material to NaCl, which can improve ionic conductivity in an aqueous solution during water discharge of a battery, accelerate a discharge rate, and at the same time minimize solid residues remaining after drying and calcination processes.

### [DETAILED DESCRIPTION OF THE INVENTION]

### [Technical Problem]

The technical problem to be solved by the present invention is to provide a battery processing method including a method for discharging a lithium-containing battery, which utilizes an alternative material to NaCl capable of improving ionic conductivity in an aqueous solution during water discharge of a battery, accelerating a discharge rate, and at the same time minimizing solid residues remaining after drying and calcination processes.

### [Technical Solution]

The present invention relates to a battery processing method including a step of discharging a waste battery containing lithium according to an embodiment, the method comprising: preparing a battery; and water-discharging the battery in an aqueous solution containing a sulfate-based ionic material, wherein the sulfate-based ionic material may be a by-product generated in a waste battery recycling process.

In an embodiment, the sulfate-based ionic material may be mirabilite (Na₂SO₄). In an embodiment, the mirabilite may be a by-product generated in a hydrometallurgy and precursor manufacturing process.

In an embodiment, in the step of water-discharging the battery in an aqueous solution containing the sulfate-based ionic material, a concentration of the sulfate-based ionic material may be 5 wt% or more to 20 wt% based on 100 wt% of the aqueous solution. In an embodiment, in the step of water-discharging the battery in an aqueous solution containing the sulfate-based ionic material, a temperature of the aqueous solution may be 20°C or higher.

In an embodiment, after the water-discharging step, the method may include calcining the water-discharged resultant at a temperature of 200°C or higher. In an embodiment, the method may include acid-leaching black mass that has undergone the calcining step. In an embodiment, sulfuric acid may be used in the acid leaching.

In an embodiment, the step of preparing the battery may include forming an ion water injection port in at least one battery among a cylindrical battery, a pouch-type battery, and a prismatic battery. In an embodiment, the step of forming the ion water injection port may include cutting the battery.

In an embodiment, when the battery is a pouch-type or prismatic battery, the step of cutting the battery may satisfy the following Equation 1. <Equation 1> $0.02 \leq L = \left[cut length\right] / \left[entire surface length\right] \leq 0.9$

In Equation 1, [cut length] and [entire surface length] respectively mean a long-axis length of a cut portion when the battery is cut and a length based on a long axis of the battery.

In an embodiment, when the battery is circular, the ion water injection port may have a hole shape, and a cross-sectional area of the hole may be 0.01 mm² or more. In an embodiment, a cross-sectional area of the ion water injection port may be 0.01 mm² or more. In an embodiment, a depth of the ion water injection port may be 0.05 mm or more. In an embodiment, a recovery rate of Ni recovered after the acid leaching step may be 90% or more.

### [Advantageous Effects]

The battery processing method according to an embodiment of the present invention includes a battery discharge method using mirabilite (Na₂SO₄) as an additive material for improving ionic conductivity in an aqueous solution during water discharge, thereby improving ionic conductivity in the aqueous solution during water discharge of a battery, accelerating a discharge rate, and at the same time minimizing solid residues remaining after drying and calcination processes.

### [BRIEF DESCRIPTION OF THE DRAWINGS]

FIG. 1 is a view showing a step of forming a cut surface in a pouch-type or prismatic battery according to an embodiment of the present invention.
FIG. 2 is a view showing a step of forming a hole in a cylindrical battery according to an embodiment of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, in the present specification, unless otherwise stated, % means wt%.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereto, and the present invention is only defined by the scope of the claims to be described below.

The battery processing method according to an embodiment of the present invention relates to a battery processing method including a step of discharging a waste battery containing lithium. Specifically, the battery processing method of the present invention includes a step of preparing a battery and a step of water-discharging the battery in an aqueous solution containing a sulfate-based ionic material.

The step of preparing the battery may be a step of preparing a waste battery. The waste battery may be, for example, a lithium secondary battery separated from an automobile, a secondary battery separated from an electronic device such as a mobile phone, a camera, or a notebook computer, and specifically a lithium secondary battery.

In an embodiment, in the step of preparing the battery, the battery may include at least one battery among a cylindrical battery, a pouch-type battery, and a prismatic battery. Specifically, the battery may mean at least one battery cell included in a battery pack or module.

The step of water-discharging the battery in an aqueous solution containing a sulfate-based ionic material may be a step of discharging the battery by immersing the battery in an aqueous solution containing the sulfate-based ionic material or by introducing the aqueous solution into the battery.

Specifically, when energy inherent in the battery is short-circuited, as shown in the following Reaction Scheme, the battery may generate a large amount of heat as current rapidly increases in a situation where resistance is very low. The large amount of heat may heat a flammable electrolyte material, thereby causing a risk of fire or explosion.

### [Reaction Scheme]

$H = Heat of Joule = {I}^{2} / R * Δt$ (I=current, R=resistance, Δt=short-circuit exposure time)

In addition, as in a conventional method, water-discharging the battery by brine discharge using an ionic material such as NaCl can suppress an exothermic reaction caused by a short-circuit phenomenon generated during forced discharge, but has a problem in that HF gas, which is a harmful gas generated as fluorine dissolved in the electrolyte is gasified during discharge, and wastewater in which F is dissolved are generated.

In an embodiment of the present invention, by including the step of water-discharging the battery in an aqueous solution containing a sulfate-based ionic material, the ionic material can reduce an interference effect with SO₄²⁻ ions during sulfuric acid treatment in a leaching step, thereby suppressing formation of harmful gas and minimizing solid residues remaining after drying and calcination processes.

In an embodiment, the sulfate-based ionic material may be mirabilite (Na₂SO₄). The mirabilite may be a by-product generated in a waste battery recycling process. Specifically, the mirabilite is a representative by-product generated in a waste battery recycling process, specifically, a hydrometallurgy and precursor manufacturing process. The mirabilite is characterized by having more impurities than conventionally used sodium sulfate because it is partially contaminated with Ni, Co, Mn, Li, and the like during the hydrometallurgy and precursor manufacturing process. These materials may be 1% or less in the mirabilite.

The mirabilite is generated in an amount of about 2 to 3 times the amount of materials input in solvent extraction of hydrometallurgy, and causes a problem of contaminating soil as an environmentally harmful material when landfilled. By recycling the mirabilite as the sulfate-based ionic material in the battery processing method of the present invention, it is possible to provide an environmentally friendly and economical battery processing method that minimizes side reactions with sulfuric acid in a subsequent process.

In an embodiment, in the step of water-discharging the battery in an aqueous solution containing the sulfate-based ionic material, the concentration of the sulfate-based ionic material may be 5 wt% or more to 40 wt% based on 100 wt% of the aqueous solution. Specifically, the concentration of the sulfate-based ionic material may be 8.5 wt% to 30 wt%, more specifically 10 wt% to 25 wt%, more specifically 9 wt% to 20 wt%, and still more specifically 10 wt% to 15 wt%.

As the concentration of the sulfate-based ionic material satisfies the above-described range, the battery can be safely discharged while maintaining an appropriate discharge rate. When the concentration is outside the upper limit of the above-described range, there is a problem in that the risk of fire increases as the ion water temperature rises due to an excessive discharge rate. When the concentration is outside the lower limit of the above-described range, there is a problem in that the discharge rate is delayed.

In an embodiment, in the step of water-discharging the battery in an aqueous solution containing the sulfate-based ionic material, the temperature of the aqueous solution may be 20°C or higher. Specifically, the temperature may be 20°C to 80°C, more specifically 40°C to 80°C, and still more specifically 60°C to 80°C.

As the temperature satisfies the above-described range, the discharge rate can be improved under the same concentration. When the temperature is outside the upper limit of the above-described range, there is a problem in that the risk of fire increases as the temperature rises due to excessive discharge and the ion water evaporates. When the temperature is outside the lower limit of the above-described range, there is a problem in that the movement of the ionic material becomes slow, thereby delaying the discharge time.

In an embodiment, after the water-discharging step, the method may include calcining the water-discharged resultant at a temperature of 200°C or higher. Specifically, the step of calcining the water-discharged resultant in the above-described temperature range may be performed at 200°C to 500°C, specifically 200°C to 400°C, and more specifically 250°C to 350°C. The calcining step may be a step of volatilizing and removing materials such as ion water or an electrolyte remaining inside the battery after completion of water discharge of the battery using ion water.

As the temperature of the calcining step satisfies the above-described temperature range, liquid materials remaining inside the battery are completely volatilized, thereby improving safety in the battery processing process. When the temperature of the calcining step is outside the upper limit of the above-described range, there is a problem in that harmful gases such as H₂ or SO₂ are generated. When the temperature of the calcining step is outside the lower limit of the above-described range, there is a problem in that liquid materials in the battery are not easily removed.

In an embodiment, before the calcining step, the method may include a step of crushing the battery. The step of crushing the battery may be a step of crushing the battery that has undergone a discharge process by applying an external force thereto. Specifically, the step of crushing the battery may mean a process of applying impact or pressure to the battery such that a portion of the battery is separated from the battery.

In an embodiment, the step of crushing the battery may mean all of a process of pulverizing the battery, a process of cutting the battery, a process of compressing the battery, and a combination thereof. Specifically, the crushing step may include all processes by which the battery can be destroyed to obtain crushed materials having a small size.

In an embodiment, the step of crushing the battery may include all processes of compressing the battery or destroying the battery by applying an external force such as a shear force or tensile force. The step of crushing the battery may be performed, for example, using a crusher.

In an embodiment, the step of crushing the battery may be performed at least once. Specifically, the crushing step may be performed continuously or discontinuously at least once.

In an embodiment, the step of crushing the battery may be performed under a condition of supplying inert gas, carbon dioxide, nitrogen, water, or a combination thereof, or under a vacuum atmosphere condition of 100 torr or less. By performing crushing under the above atmosphere, explosion of the battery can be prevented, and vaporization of the electrolyte solution can be suppressed, so that flammable gases such as ethylene, propylene, or hydrogen may not be generated. By including the step of crushing the battery, process efficiency in a subsequent drying or calcining step can be increased.

In an embodiment, the method may include acid-leaching black mass that has undergone the calcining step. Specifically, the acid-leaching step may be a step of using sulfuric acid. Specifically, the acid-leaching step may be a step of leaching the black mass in sulfuric acid to recover valuable metals.

In an embodiment, the acid-leaching step may further include a reducing agent. Specifically, the acid-leaching step may be a step of further adding a reducing agent to an acidic solution to recover valuable metals from the black mass. In an embodiment, the reducing agent may be selected from the group consisting of hydrogen peroxide, H₂S, SO₂, FeSO₄, coal, and pyrite. By further adding the reducing agent to the acidic solution, an acid leaching rate can be further increased.

In an embodiment, a recovery rate of Ni recovered after the acid leaching step may be 90% or more. As described above, by adding the mirabilite of the present invention as an ionic material during water discharge, interference with sulfuric acid in the acid leaching step can be minimized, thereby increasing the recovery rate of Ni, which is a valuable metal.

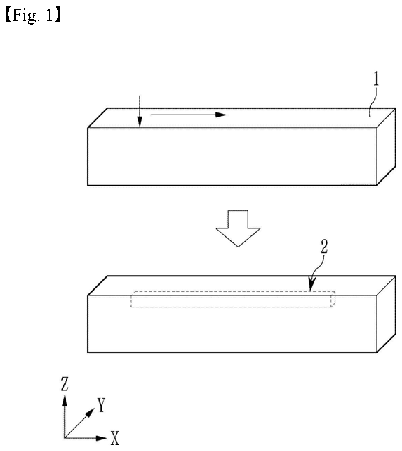

FIG. 1 is a view showing a step of forming a cut surface in a pouch-type or prismatic battery according to an embodiment of the present invention.

Referring to FIG. 1, a step of cutting a pouch-type or prismatic battery is illustrated. In an embodiment, a pouch-type or prismatic battery 1 may include a step of forming at least one ion water injection port 2 on a surface thereof. The ion water injection port 2 may be a member into which an aqueous solution containing an ionic material is injected to water-discharge the battery. Specifically, the ion water injection port 2 may be a region into which the aqueous solution containing the ionic material is injected so that ion water can be easily injected during a water discharge process of the battery. The prismatic or pouch-type battery 1 has a problem in that the electrolyte solution is vaporized during a calcination process and the battery explodes.

The step of forming the ion water injection port 2 may be forming a region into which the aqueous solution containing the ionic material is injected by including a step of cutting the battery. Specifically, the region into which the aqueous solution containing the ionic material is injected may mean a cut surface. More specifically, the cut surface may mean a region having a three-dimensional space extending in the thickness direction of the cylindrical battery from a figure having a two-dimensional shape included in the surface of the pouch-type or prismatic battery.

In an embodiment, when the battery is a pouch-type or prismatic battery, the step of cutting the battery may satisfy the following Equation 1. <Equation 1> $0.02 \leq L = \left[cut length\right] / \left[entire surface length\right] \leq 0.9$

In Equation 1, [cut length] and [entire surface length] respectively mean a long-axis length of a cut portion when the battery is cut and a length based on a long axis of the battery.

Equation 1 may be an index of stabilization in a pretreatment step of the pouch-type or prismatic battery 1. Specifically, Equation 1 may satisfy 0.02 to 0.9. As Equation 1 satisfies the above-described range, water discharge time can be appropriately maintained in the battery processing process, and a recovery rate of black mass can be increased.

When Equation 1 is outside the lower limit of the above-described range, there is a problem in that water discharge time is prolonged because electrolyte ionic conductivity is not transferred during water discharge. When Equation 1 is outside the upper limit of the above-described range, the water discharge time is shortened, but the battery is excessively swollen, the surface of the battery is damaged, and internal positive electrode or negative electrode materials are discharged to the outside, thereby causing a problem in that the recovery rate of black mass decreases.

In an embodiment, the cross-sectional area of the ion water injection port, which is the cut surface, may be 0.01 mm² or more. Specifically, the cross-sectional area may satisfy 0.1 mm² to 10.0 mm², and more specifically 1.0 mm² to 6.0 mm².

In an embodiment, the pouch-type or prismatic battery 1 may include an outer sheath including aluminum or iron, and a positive electrode material and a negative electrode material disposed in the outer sheath. In an embodiment, the outer sheath of the pouch-type or prismatic battery 1 may have a thickness of 0.01 mm to 1.0 mm. In an embodiment, the outer sheath of the pouch-type or prismatic battery 1 may have a total amount of Fe and Al of 70 at% or more based on 100 at% of the battery outer sheath.

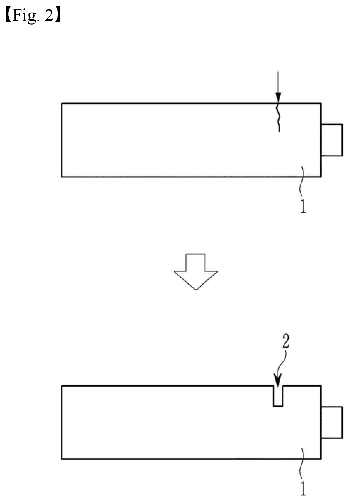

FIG. 2 is a view showing a step of forming a hole in a cylindrical battery according to an embodiment of the present invention.

Referring to FIG. 2, a step of cutting a cylindrical battery 1 is illustrated. In an embodiment, the cylindrical battery 1 may include a step of forming at least one ion water injection port 2 on a surface thereof. The ion water injection port 2 may be a member into which an aqueous solution containing an ionic material is injected to water-discharge the battery. The cylindrical battery 1 has a problem in that the electrolyte solution is vaporized during a calcination process and the battery explodes.

In an embodiment, the cross-sectional area of the ion water injection port 2 may be 0.01 mm² or more. Specifically, the cross-sectional area may satisfy 0.1 mm² to 10.0 mm², and more specifically 1.0 mm² to 6.0 mm². When the cross-sectional area of the ion water injection port 2 satisfies the above-described range, the hole is easily formed, and ion water is rapidly injected into the battery in a subsequent process, thereby shortening the discharge time. A horizontal cross-section of the hole may mean a three-dimensional space extending in the thickness direction of the cylindrical battery 1 from a figure having a two-dimensional shape included in the surface of the cylindrical battery. The hole may have, for example, a circular or polygonal shape, and the hole may encompass terms such as a hole, a gap, or a crack.

In an embodiment, the depth of the hole may be 0.05 mm or more. The depth of the hole may mean a vertical distance between a line segment and the surface of the cylindrical battery when an arbitrary line segment is drawn in a direction parallel to the horizontal direction of the cylindrical battery. Specifically, the depth of the hole may be 0.1 mm to 1.5 mm, and more specifically 0.5 mm to 1.0 mm.

Referring to FIGS. 1 and 2, in an embodiment, the ion water injection ports 2 may be 1 to 40 in number. Specifically, the ion water injection ports 2 may be 2 to 30 in number, and more specifically 2 to 15 in number. As the number of the ion water injection ports 2 satisfies the above-described range, injection of ion water is easy during water discharge, and the battery can be safely discharged by shortening the process time.

In an embodiment, the step of forming the ion water injection port may form a passage through which ions are injected by various means such as a drill, a punch, a needle, a laser, a cutter, compression fracture, or shear fracture means.

In an embodiment, the cylindrical battery may include an outer sheath containing iron and a positive electrode material and a negative electrode material disposed in the outer sheath. The outer sheath containing iron may include 60 at% or more of iron based on 100 at% of the outer sheath.

### <Experimental Example>

### Comparison of Discharge Rate According to Concentration of Ionic Material Added During Water Discharge

As a battery discharge method, discharge rates according to types of ionic materials added to an aqueous solution during water discharge were compared. At this time, the ionic materials added were NaCl, Na₂SO₄, and NaNO₃, one surface of a pouch-type battery was cut, and the cut length relative to the entire length was 50%, so that the L value was adjusted to 0.5.

In addition, the temperature of ion water was maintained at about 20°C, and discharge time and residual voltage in the battery were measured.

Table 1 below shows battery discharge time and residual voltage according to the type and concentration of the ionic material. The concentration of the ionic material means a concentration based on 100 wt% of the aqueous solution, and the discharge time and residual voltage were measured by the following methods.

Discharge time: measured by a recording method using a digital timer device.

Residual voltage: voltage change according to discharge time was measured using a voltage recorder device.

**[Table 1]**

| Ionic Material | Concentration (wt%) | Discharge Time (hr) | Residual Voltage (V) | Remarks |
|---|---|---|---|---|
| NaCl | 5 | 22 | 0.1 | Comparative Example |
| | 10 | 12 | 0.1 | Comparative Example |
| | 15 | 6 | 0.2 | Comparative Example |
| | 20 | 4 | 0.2 | Comparative Example |
| Na₂SO₄ | 5 | 31 | 0.2 | Example |
| | 10 | 18 | 0.3 | Example |
| | 15 | 13 | 0.1 | Example |
| | 20 | 9 | 0.1 | Example |
| NaNO3 | 5 | 38 | 0.1 | Comparative Example |
| | 10 | 26 | 0.2 | Comparative Example |
| | 15 | 18 | 0.1 | Comparative Example |
| | 20 | 12 | 0.2 | Comparative Example |

Referring to Table 2, it was confirmed that, with the same ionic material, the discharge time decreased as the concentration in the aqueous solution increased. In addition, in terms of discharge efficiency, it was confirmed that the efficiency increased in the order of NaCl, Na₂SO₄, and NaNO₃.

### Discharge Rate According to Temperature of Ion Water

During water discharge, discharge rates of batteries according to types of ionic materials added to the aqueous solution were compared. The ionic materials added during discharge were NaCl, Na₂SO₄, and NaNO₃, one surface of a pouch-type battery was cut, and the cut length relative to the entire length was 50%, so that the L value was 0.5. The concentration of the ionic material was maintained at 10 wt%, and the discharge time and residual voltage of the battery were measured while changing the ion water temperature as shown in Table 2 below.

**[Table 2]**

| Ionic Material | Temperature (°C) | Discharge Time (hr) | Residual Voltage (V) | Remarks |
|---|---|---|---|---|
| NaCl | 20 | 12 | 0.1 | Comparative Example |
| | 40 | 10 | 0.1 | Comparative Example |
| | 60 | 8 | 0.2 | Comparative Example |
| | 80 | 7 | 0.2 | Comparative Example |
| Na₂SO₄ | 20 | 18 | 0.2 | Example |
| | 40 | 15 | 0.3 | Example |
| | 60 | 11 | 0.1 | Example |
| | 80 | 9 | 0.1 | Example |
| NaNO₃ | 20 | 26 | 0.1 | Comparative Example |
| | 40 | 25 | 0.2 | Comparative Example |
| | 60 | 21 | 0.1 | Comparative Example |
| | 80 | 17 | 0.2 | Comparative Example |

Referring to Table 3, it was confirmed that, when the temperature of ion water to which each ionic material was added was increased, the discharge time decreased.

### Effect on Ni Recovery Rate in Hydrometallurgy Process After Water Discharge Process by Ionic Material

After the water discharge process by ionic material, a black mass containing positive electrode/negative electrode materials was recovered through a calcination process. In order to confirm the effects, in a hydrometallurgy process, of Cl⁻-, SO₄²⁻-, and NO₃⁻-containing ionic materials that may remain in the black mass after the water discharge process by ionic material, Ni recovery rates according to types of acids used in the hydrometallurgy process and ionic materials were compared.

The ionic materials added during battery discharge were NaCl, Na₂SO₄, and NaNO₃, one surface of a pouch-type battery was cut, and the cut length relative to the entire length was 50%, so that the L value was 0.5. The concentration of the ionic material was maintained at 10 wt%, the ion water temperature was maintained at 20°C, and the calcination treatment temperature was maintained at 300°C.

Table 3 below shows nickel recovery rates when calcination and acid leaching were performed according to types of ionic materials.

**[Table 3]**

| Ionic Material During Discharge | Ionic Material Concentration (wt%) | Ion Water Temperature (°C) | Calcination Treatment Temperature (°C) | Leaching Solution | Ni Recovery Rate (%) |
|---|---|---|---|---|---|
| NaCl | 10 | 20 | 300 | H₂SO₄ | 81 |
| Na₂SO₄ | | | | H₂SO₄ | 98 |
| NaNO₃ | | | | H₂SO₄ | 86 |
| Na₂SO₄ | | | 50 | H₂SO₄ | 73 |
| Na₂SO₄ | | | 650 | H₂SO₄ | 84 |

Referring to Table 3, it was confirmed that, when leaching was performed using acids (HCl, H₂SO₄, HNO₃) containing anions matching the anions Cl⁻, SO₄²⁻, and NO₃⁻ of the ionic materials and Ni was recovered, the highest recovery rate could be secured. This confirmed that, during acid leaching using sulfuric acid or nitric acid, two or more types of anions such as Cl⁻, SO₄²⁻, and NO₃⁻ remain in an aqueous solution while remaining in the black mass, making it difficult to adjust pH performed to remove impurities, thereby causing a problem of reduced recovery rate of valuable metals.

### Water Discharge Result Using Recycled Mirabilite (Na₂SO₄)·10H₂O

Mirabilite generated in a large amount in hydrometallurgy and precursor manufacturing processes is a representative by-product generated in a LiB waste battery recycling process. The mirabilite is a by-product that causes a problem of contaminating soil as an environmentally harmful material when landfilled.

The amount of the mirabilite generated is about 2 to 3 times the amount of materials input in the solvent extraction process of hydrometallurgy, and the amount of mirabilite generated is about 2 to 3 times the amount of materials input in solvent extraction of hydrometallurgy. The present invention relates to recycling of the mirabilite, and was performed by adding the mirabilite as an ionic material during water discharge of a waste battery. At this time, the battery was a pouch-type battery, one surface was cut, the cut length relative to the entire length was 50%, the L value was 0.5, the ion water temperature was maintained at 20°C, and discharge time and residual voltage in the battery were measured. Thereafter, calcination treatment at 300°C and an acid leaching process were performed, and the recovery rate of Ni was evaluated.

Table 4 below shows nickel recovery rates from batteries according to water discharge conditions.

**[Table 4]**

| Ionic Material During Discharge | Discharge Time (hr) | Residual Voltage (V) | Calcination Treatment Temperature (°C) | Leaching Solution | Ni Recovery Rate (%) |
|---|---|---|---|---|---|
| (Na₂SO₄)·10H₂O | 17 | 0.1 | 300 | H₂SO₄ | 99 |
| NaCl | 12 | 0.1 | | H₂SO₄ | 81 |
| NaNO₃ | 26 | 0.2 | | H₂SO₄ | 86 |

Referring to Table 4, it was confirmed that mirabilite had no interference effect with SO₄²⁻ions during sulfuric acid treatment, and thus the recovery rates of valuable metals such as Li, Ni, and Co were superior compared with ionic materials of NaCl and NaNO₃. As described above, it was confirmed that the Example using mirabilite had an excellent Ni recovery rate compared with other ionic materials during sulfuric acid treatment.

Although preferred embodiments have been described in detail above, the scope of rights of the present invention is not limited thereto, and various modifications and improvements made by those skilled in the art using the basic concept defined in the following claims also belong to the scope of rights of the present invention.

## Claims

1. A battery processing method comprising discharging a waste battery containing lithium, the battery processing method comprising:
preparing a battery; and
water-discharging the battery in an aqueous solution containing a sulfate-based ionic material,
wherein the sulfate-based ionic material is a by-product generated in a waste battery recycling process.

2. The battery processing method of claim 1,
wherein the sulfate-based ionic material is mirabilite (Na₂SO₄).

3. The battery processing method of claim 2,
wherein the mirabilite is a by-product generated in a hydrometallurgy and precursor manufacturing process.

4. The battery processing method of claim 1,
wherein, in water-discharging the battery in the aqueous solution containing the sulfate-based ionic material, a concentration of the sulfate-based ionic material is 5 wt% or more to 40 wt% based on 100 wt% of the aqueous solution.

5. The battery processing method of claim 1,
wherein, in water-discharging the battery in the aqueous solution containing the sulfate-based ionic material, a temperature of the aqueous solution is 20°C or higher.

6. The battery processing method of claim 1, further comprising, after water-discharging,
calcining the water-discharged resultant at a temperature of 200°C or higher.

7. The battery processing method of claim 6, further comprising
acid-leaching black mass that has undergone the calcining.

8. The battery processing method of claim 7,
wherein the acid leaching uses sulfuric acid.

9. The battery processing method of claim 1,
wherein preparing the battery comprises forming an ion water injection port in at least one battery among a cylindrical battery, a pouch-type battery, and a prismatic battery.

10. The battery processing method of claim 10,
wherein forming the ion water injection port comprises cutting the battery.

11. The battery processing method of claim 10,
wherein, when the battery is a pouch-type or prismatic battery,
cutting the battery satisfies the following Equation 1: <Equation 1> $0.02 \leq L = \left[cut length\right] / \left[entire surface length\right] \leq 0.9$
wherein, in Equation 1, [cut length] and [entire surface length] respectively mean a long-axis length of a cut portion when the battery is cut and a length based on a long axis of the battery.

12. The battery processing method of claim 10,
wherein, when the battery is circular,
the ion water injection port has a hole shape, and
a cross-sectional area of the hole is 0.01 mm² or more.

13. The battery processing method of claim 11,
wherein a cross-sectional area of the ion water injection port is 0.01 mm² or more.

14. The battery processing method of claim 12,
wherein a depth of the ion water injection port is 0.05 mm or more.

15. The battery processing method of claim 9,
wherein a recovery rate of Ni recovered after the acid leaching step is 90% or more.
